# EUROPÄISCHE PATENTSCHRIFT

(11) **EP 2 987 730 B1**
(45) Veröffentlichungstag und Bekanntmachung des Hinweises auf die Patenterteilung: **21.11.2018**
(21) Anmeldenummer: 14183522.3
(22) Anmeldetag: 04.09.2014
(51) Int. Cl.: B64F 1/305

(54) **Kuppelmodul für Fluggastbrücke**
Interface module for passenger bridge
Module d'interface pour passerelle d'embarquement

(30) Priorität: 16.08.2014 EP 14002855
(43) Veröffentlichungstag der Anmeldung: 24.02.2016
(73) Patentinhaber: Hübner GmbH & Co. KG, 34123 Kassel (DE)
(72) Erfinder: Karasek, Jens, 34260 Kaufungen (DE); Schulz, Ralf, 34317 Habichtswald (DE); Heinrich, Marc, 200042 Shanghai (CN)
(74) Vertreter: Patentanwälte Walther Hinz Bayer PartGmbB

(56) Entgegenhaltungen:
- EP-A2- 1 867 569
- EP-B1- 2 397 411
- EP-B1- 2 463 199
- ES-A1- 2 334 631

## Beschreibung

Kuppelmodul als Schnittstelle zwischen der Kabine einer Fluggastbrücke und einem Flugzeug.

Die Erfindung betrifft ein Kuppelmodul als Schnittstelle zwischen der Kabine einer Fluggastbrücke und einem Flugzeug , gemäß dem Oberbegriff des Anspruches 1.

Fluggastbrücken sind aus dem Stand der Technik hinreichend bekannt. Fluggastbrücken dienen dem Übergang von Personen von dem Flugzeug unmittelbar in das Flughafengebäude. Da das Flughafengebäude häufig höher ist als die Türöffnung des Flugzeugs, verlaufen die Flugzeugbrücken, die am vorderen Ende durch ein Fahrgestell gehalten sind, häufig schräg nach unten in Richtung auf die Türöffnung des Flugzeugs zu. Am unteren Ende der Fluggastbrücke weist die Fluggastbrücke eine um eine vertikale und bis zu 90° zur Längsachse der Fluggastbrücke verschwenkbare Kabine auf, wobei am vorderen Ende ein Kuppelmodul zum Übergang von der Kabine in das Flugzeug angeordnet ist (WO00/76847 A2). Eine ähnliche Gestaltung einer Fluggastbrücke zeigen die US 2002/0116771 A1 sowie die DE 10046010 A1. Eine um eine vertikale Achse verschwenkbare Kabine zeigt ebenfalls die US 4,559,660. Es wurde bereits darauf hingewiesen, dass sich die Fluggastbrücke nach unten verlaufend zum Gebäude des Flugzeugs erstreckt. Die Folge hiervon ist, dass das an der Kabine angeordnete Kuppelmodul, das einen Boden aufweist, der von einem ausstellbaren Vordach U-förmig überspannt wird, schräg stehend zum Flugzeug mit seinem an der Stirnseite des Vordachs angeordneten Bumper an der Außenhaut des Flugzeugs anliegt.

Bekannt sind ebenfalls Kuppelmodule mit einem Vordach und einem Boden, wobei der Boden um die Mittellängsachse beweglich in dem Kuppelmodul gelagert ist. Die schwenkbewegliche Anordnung des Bodens im Kuppelmodul ist aufwendig.

Eine ganze Reihe von Flugzeugen weisen über dem Einstieg eine Regenrinne auf. Aufgrund der schräg stehenden Fluggastbrücke und korrespondierend hierzu aufgrund der schrägen Lage des Kuppelmoduls ist es bei Anlage des Balges mit dem frontseitig angeordneten Bumper so, dass der Bumper bei Draufsicht auf die Flugzeugtür häufig auf der rechten Seite an der Regenrinne anliegt, und auf der linken Seite oben über die Kontur des Flugzeugs übersteht. Dies ist insbesondere bei kleineren Flugzeugen der Fall, deren Kontur im Bereich der vorderen Tür unmittelbar nach der Tür zum Cockpit zu abfallend ist. Die Folge hiervon ist, dass der Bumper auf der rechten Seite der Türöffnung mit dem er auf der Regenrinne aufliegt, relativ schnell verschleißt und auf der linken Seite mit der Außenhaut des Flugzeugs eine Öffnung bildet, durch die Regen, Schnee usw. eintreten können.

Zur Behebung dieser Probleme wird gemäß der EP 2397411 B1 vorgeschlagen, dass das Kuppelmodul durch die Kabine der Fahrgastbrücke um die horizontal verlaufende Mittellängsachse verschwenkbar gehalten ist. Durch die schwenkbare Anordnung des Kuppelmoduls an der Kabine der Fluggastbrücke entlang eines Kreisbogens wird erreicht, dass das Kuppelmodul mit der Oberkante des Bumpers immer genau parallel zur Flugzeugtür ausgerichtet werden kann. Das heißt, dass die obere Kante der Öffnung der Flugzeugtür als Referenzlinie für die Ausrichtung des Kuppelmoduls dient. Hierbei kann der Boden des Kuppelmoduls feststehend ausgebildet sein, was sich positiv auf die Kosten auswirkt. In diesem Zusammenhang ist aus der EP 2463199 B1 ein feststehender Boden für ein Kuppelmodul als Schnittstelle bekannt, der allerdings einzelne in Richtung des Flugzeugs ausfahrbare Segmente aufweist, um den Boden an die Kontur des Flugzeugs anzupassen. Wenn allerdings das Kuppelmodul parallel zur oberen Kante der Türöffnung ausgerichtet ist, dann vermindert dies einerseits den Verschleiß am Bumper, und andererseits sorgt es dafür, dass der Bumper umlaufend dicht an der Außenhaut des Flugzeugs im Bereich der Türöffnung des Flugzeugs anliegt.

Das Kuppelmodul gemäß der EP 2397411 B1 hat sich im täglichen Einsatz überaus bewährt, nachteilig ist jedoch, wie bei jedem anderen Kuppelmodul auch, die insbesondere vertikale Erstreckung dieses Kuppelmoduls. Die vertikale Erstreckung oder Höhe des Kuppelmoduls beläuft sich auf etwa 3,70 m. Der Transport eines solchen Kuppelmoduls im zusammengebauten Zustand gestaltet sich insofern sehr aufwendig, als zum Transport keine üblichen Container verwendet werden können. Insofern ist man auch dazu übergegangen, dass Kuppelmodul im demontierten Zustand zu verschicken, was allerdings den Nachteil hat, dass es vor Ort zusammengebaut werden muss. Aufgrund der Vielzahl der Einzelteile und der Komplexität der Konstruktion und hier insbesondere der Schwenkeinrichtung hat es sich als notwendig herausgestellt, dass vielfach durch Personal vom Hersteller vor Ort die Montage des Kuppelmoduls für eine solche Fluggastbrücke überwacht werden muss. Dies ist teuer und bindet schlussendlich auch Personal.

Aus der ES 23 34 631 A1 ist eine Fluggastbrücke mit einem Kuppelmodul mit frontseitigem Vordach bekannt, wobei das Kuppelmodul horizontal teilbar ist, um den Transport zu erleichtern.

Die der Erfindung zugrunde liegende Aufgabe besteht darin, hier Abhilfe zu schaffen. Insbesondere soll die Möglichkeit des Transports eines solchen Kuppelmoduls in einem handelsüblichen Container ermöglicht werden, um beim Transport Kosten zu sparen. Darüber hinaus soll eine Ausrichtung des Kuppelmoduls relativ zur Türöffnung des Flugzeugs möglich sein.

Zur Lösung der Aufgabe dienen die Merkmale des kennzeichnenden Teils des Anspruchs 1 in Verbindung mit den Merkmalen des Oberbegriffs. Das heißt, dass Kuppelmodul ist in der Höhe teilbar. Die Teilbarkeit soll insbesondere so gestaltet sein, dass die Montage einfach ist und insbesondere vor Ort der Zusammenbau auch durch ungeschultes Personal problemlos erfolgen kann. Insbesondere soll vermieden werden, dass Personal des Herstellers die Montage überwachen muss. Des Weiteren erfolgt die Teilung des Kuppelmoduls auf einer Höhe von etwa 2 m. Dies hat zur Folge, dass die Teile des Kuppelmoduls durch die Tür eines üblichen Containers passen. Das Kuppelmodul umfasst zwei Schenkel sowie einen die Schenkel deckenseitig verbindenden Deckensteg, wobei das Kuppelmodul im Bereich der Schenkel unter Bildung eines Kuppelmodulkopfes und eines Kuppelmodulfußteiles teilbar ist. Des Weiteren ist vorgesehen, dass das Kuppelmodul einen Adapterrahmen und einen Schwenkrahmen aufweist, wobei der Adapterrahmen und der Schwenkrahmen im Bereich des Kuppelmodulfußteils durch eine Schwenkeinrichtung miteinander in Verbindung stehen. Durch eine Verschwenkbarkeit des Kuppelmoduls mit dem Vordach um eine gedachte horizontale Achse relativ zur Kabine der Fluggastbrücke erfolgt eine Ausrichtung des Kuppelmoduls relativ zur Türöffnung des Flugzeugs. Dadurch nun, dass die Schwenkeinrichtung im Bereich des Kuppelmodulfußteiles angeordnet ist, bildet dieser Teil des Kuppelmoduls eine vorgefertigte Einheit, die bei der Montage bzw. Demontage in keinerlei Weise irgendwelche Anpassungen erforderlich macht. Das heißt, dass das Kuppelmodulfußteil unmittelbar in der Form, in der es verpackt worden ist, mit dem Kuppelmodulkopfteil verbunden werden kann, sodass dann unmittelbar nach Anbringung des Vordaches ein gebrauchsfähiges Kuppelmodul vorliegt. Das heißt, eine etwaige Justierung der Schwenkeinrichtung ist nicht erforderlich. Hieraus wird aber auch deutlich, dass z. B. ein Abnahmeprotokoll für die Schwenkeinrichtung seine Gültigkeit behält.

Vorteilhafte Merkmale und Ausgestaltungen der Erfindung ergeben sich aus den Unteransprüchen.

Insbesondere ist vorgesehen, dass der Adapterrahmen und der Schwenkrahmen des Kuppelmoduls im Bereich des Kuppelmodulbodens einen Bodensteg aufweisen, wobei die Schwenkeinrichtung mindestens drei Schwenkvorrichtungen aufweist, wobei jeweils eine Schwenkvorrichtung an jedem Fußteilschenkel und eine Schwenkvorrichtung am Bodensteg angeordnet ist. Hieraus wird noch einmal deutlich, dass sämtliche Teile der Schwenkeinrichtung Bestandteil des Kuppelmodulfußteiles sind.

Weiterhin weist jede Schwenkvorrichtung einen kreisbogenförmigen im Querschnitt runden Schienenabschnitt zur Aufnahme von mindestens zwei Rollen auf, wobei der Schienenabschnitt am Adapterrahmen und die mindestens zwei Rollen am Schwenkrahmen angeordnet sind.

Zur Führung der Rollen auf dem kreisbogenförmigen, im Querschnitt runden Schienenabschnitts besitzen die Rollen zu beiden Enden jeweils einen ersten und einen zweiten Bund. Vorteilhaft ist hierbei der erste Bund auf der Seite der Rolle, der dem Adapterrahmen zugewandt ist, in seiner Erstreckung in Richtung auf den Äquator des im Querschnitt runden Schienenabschnitts größer als der des Bundes der Rolle auf der gegenüberliegenden Seite der Rolle. Dies vor folgendem Hintergrund: Der Boden des Kuppelmoduls wird durch den Schwenkrahmen gehalten. Das heißt, dass bei auf dem Boden des Schwenkrahmens aufstehenden Personen der Schwenkrahmen ein Moment in Richtung der Vorderseite des Bodens erfährt. Dadurch nun, dass der Bund auf der Seite der Rolle, die dem Adapterrahmen zugewandt ist, größer ist, kann hierdurch das höhere Moment problemlos abgefangen werden. Das bedeutet, dass die Einleitung der entsprechenden Kräfte, insbesondere bei Belastung des Bodens, in die Schiene durch die Rolle gleichmäßiger erfolgt.

Vorteilhaft weisen das Kuppelmodulkopfteil zwei Kopfteilschenkel und das Kuppelmodulfußteil zwei Fußteilschenkel auf, wobei die Kopfteilschenkel und die Fußteilschenkel durch mindestens einen Zapfen miteinander in Verbindung stehen. Der Zapfen hat hierbei zwei Aufgaben; zum einen sorgt er für die Zentrierung des Kuppelmodulkopfteiles zu dem Kuppelmodulfußteil bei der Montage und zum anderen sorgt er für die erforderliche Stabilität der Verbindung zwischen Kuppelmodulkopfteil und Kuppelmodulfußteil. Für die eigentliche Verbindung zwischen dem Kuppelmodulkopfteil und dem Kuppelmodulfußteil ist nach einem weiteren Merkmal der Erfindung vorgesehen, dass der Kopfteilschenkel und der Fußteilschenkel jeweils eine Kuppelplatte aufweisen, die miteinander, insbesondere durch Schrauben, verbindbar sind. Somit ist offensichtlich, dass auf einfache Art und Weise durch die Teilung des Kuppelmoduls in zwei Teile nämlich in jeweils ein Kuppelmodulkopfteil und ein Kuppelmodulfußteil die max. Höhe der einzelnen Bauteile so weit reduziert werden kann, dass die Teile in handelsübliche Container passen. Hierbei werden erhebliche Transportkosten gespart. Darüber hinaus ist offensichtlich, dass die Montage der beiden Teile, nämlich des Kuppelmodulkopfeiles und des Kuppelmodulfußteiles, auf einfach Art und Weise möglich ist, sodass es nicht erforderlich ist, dass das Montagepersonal der Herstellerfirma vor Ort die Montage überwacht.

Anhand der Zeichnungen wird die Erfindung nachstehend beispielhaft näher erläutert.
- Fig. 1: zeigt in perspektivischer Darstellung die Fluggastbrücke mit einem am vorderen Ende angelenkten Kuppelmodul im verschwenkten Zustand des Kuppelmoduls relativ zur Kabine der Fluggastbrücke;
- Fig. 2: zeigt eine Seitenansicht auf den Übergang von der Kabine der Fluggastbrücke zum Kuppelmodul;
- Fig. 3: zeigt das Kuppelmodul in einer Vorderansicht ohne Vordach von der Flugzeugseite aus;
- Fig. 4: zeigt eine perspektivische Ansicht des Kuppelmodulfußteils;
- Fig. 5: zeigt eine Ansicht gemäß der Einzelheit 5 aus Fig. 3;
- Fig. 6: zeigt die Einzelheit 6 aus Fig. 4;
- Fig. 7: zeigt das Kuppelmodulfußteil, wobei ausschließlich die beiden Fußteilschenkel sowie der die beiden Fußteilschenkel verbindende Bodensteg einschließlich der drei Schienenabschnitte der Schwenkeinrichtung gezeigt sind.

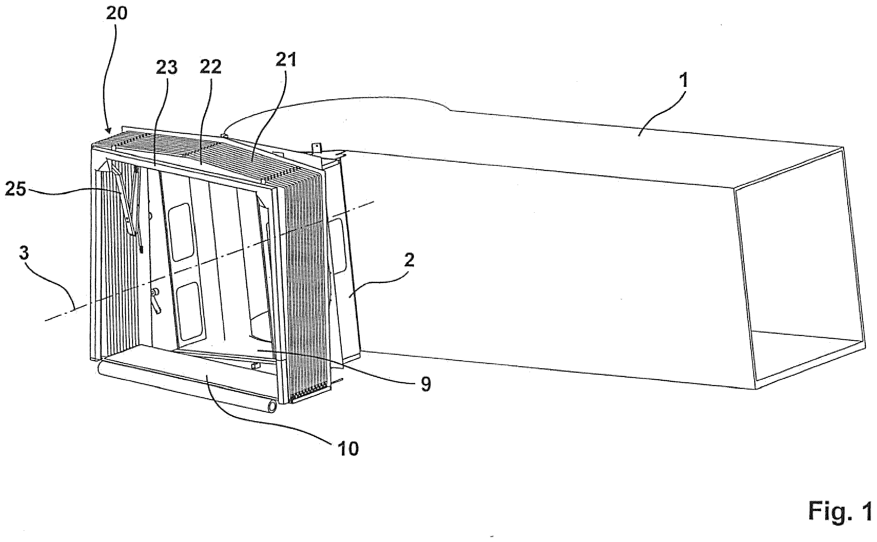

Aus der Darstellung gemäß Fig. 1 ist die mit 1 bezeichnete Fluggastbrücke erkennbar, die an ihrem vorderen Ende eine im Winkel von 90° zur Fluggastbrücke abgewinkelte Kabine zeigt, die allerdings Bestandteil der Fluggastbrücke 1 ist. An der Kabine 2 ist verschwenkbar um eine gedachte horizontale Achse 3 das insgesamt mit 20 bezeichnete Kuppelmodul angelenkt. Das Kuppelmodul 20 zeigt auf seiner freien Stirnseite einen an dem Vordach 21 angeordneten Rahmen 22, wobei an dem Rahmen der mit 23 bezeichnete Bumper angebracht ist. Im Innern des Kuppelmoduls sind zu beiden Seiten jeweils ein Schwenkarm 25 vorgesehen, die der Ausstellbewegung des Vordachs 21 des Kuppelmoduls dienen, um schlussendlich den Bumper 23 an die Außenhaut des Flugzeugrumpfs anlegen zu können. Das Kuppelmodul 20 zeigt darüber hinaus den Boden 10, auf den die Passagiere unmittelbar nach Verlassen des Flugzeugs auftreten. Hinter dem Boden 10 des Kuppelmoduls in Richtung auf die Fluggastbrücke 1 zu befindet sich der Kabinenboden 9 der Kabine, die sich an die Fluggastbrücke 1 anschließt.

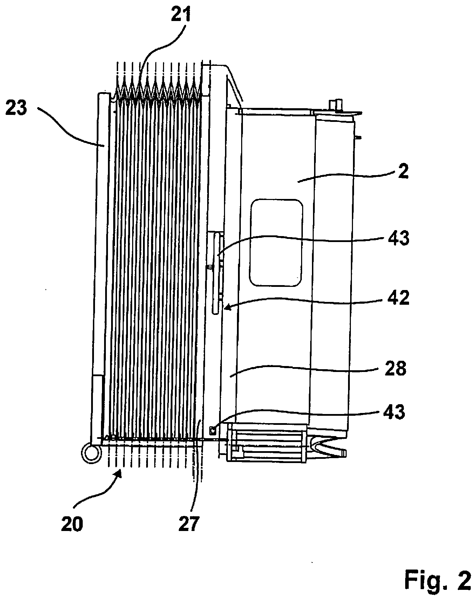

Fig. 2 zeigt nunmehr eine Seitenansicht auf das Kuppelmodul mit der Kabine gemäß der Fig. 1. Hierbei ist erkennbar, dass das Kuppelmodul einen Schwenkrahmen 27 aufweist, wobei der Schwenkrahmen 27 durch die Schwenkvorrichtungen 42 der Schwenkeinrichtung 40 mit dem Adapterrahmen 28 der Kabine 2 in Verbindung steht.

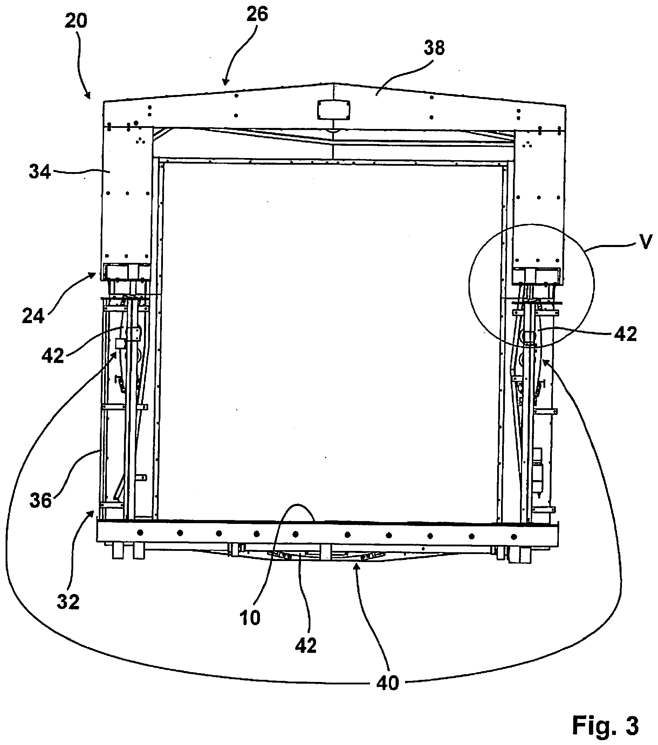

Betrachtet man nunmehr die Fig. 3 so erkennt man, dass das Kuppelmodul 20 im Einzelnen aus einem Kuppelmodulkopfteil 26 und einem Kuppelmodulfußteil 32 besteht, die beide lösbar miteinander in Verbindung stehen, worauf an anderer Stelle eingegangen werden wird. Das Kuppelmodulkopfteil 26 umfasst die beiden Kopfteilschenkel 34, die durch den Deckensteg 38 miteinander in Verbindung stehen. Das Kuppelmodulfußteil 32, das teilweise entkleidet dargestellt ist, besitzt die beiden Fußteilschenkel 36, wobei die Fußteilschenkel 36 mit den Kopfteilschenkeln 34 lösbar verbindbar sind. Jeder Fußteilschenkel 36 bildet zusammen mit dem Kopfteilschenkel 34 den Schenkel 24 des Kuppelmoduls 20; also den Kuppelmodulschenkel.

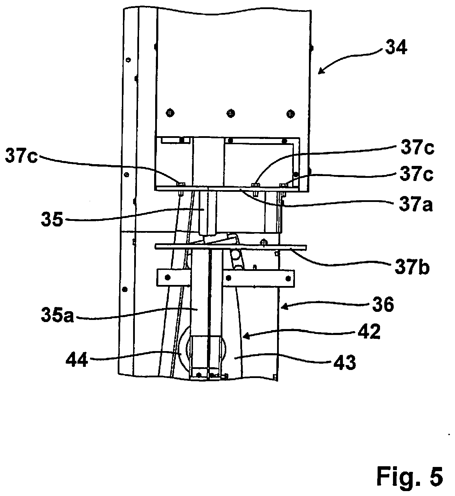

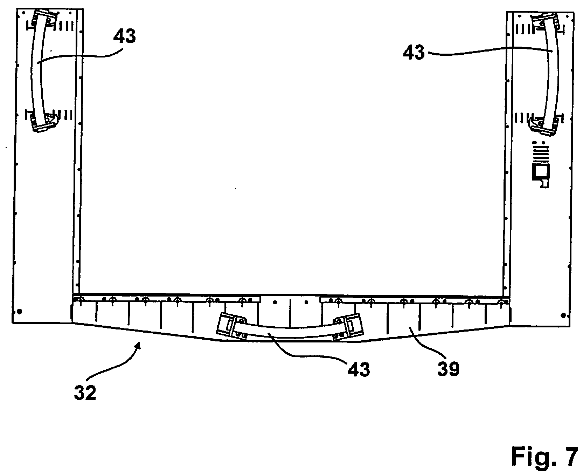

Die Fußteilschenkel 36 des Kuppelmoduls 20 sind verbunden durch den Bodensteg 39, wie sich dies insbesondere in Anschauung von Fig. 7 ergibt. Für die Teilbarkeit des Kuppelmodulkopfteils von dem Kuppelmodulfußteil wird im Folgenden auf die Fig. 5 verwiesen. Hieraus ist erkennbar, dass der Kopfteilschenkel 34 des Kuppelmodulkopfteiles 26 eine erste Kuppelplatte 37a aufweist, und der Fußteilschenkel 36 eine zweite Kuppelplatte 37b. Der Kopfteilschenkel 34 weist darüber hinaus im Bereich der ersten Kuppelplatte 37a einen Zapfen 35 auf, wobei im Bereich der zweiten Kuppelplatte 37b des Fußteilschenkels 36 eine Aufnahme 35a für den Zapfen 35 vorgesehen ist. Zum Zusammenbau des Kuppelmodulkopfteils 26 mit dem Kuppelmodulfußteil 32 gelangt nun der Zapfen 35 in die Aufnahme 35a für den Zapfen, wobei die beiden Kuppelplatten 37a und 37b durch Schrauben 37c miteinander verbunden sind.

Es wurde bereits darauf hingewiesen, dass das Kuppelmodul 20 einen Schwenkrahmen 27 und einen Adapterrahmen 28 aufweist, wobei der Schwenkrahmen 27 mit dem Adapterrahmen 28 durch eine Schwenkeinrichtung 40 in Verbindung steht. Hierbei ist wesentlich, dass sich die Schwenkeinrichtung 40 ausschließlich im Bereich des Kuppelmodulfußteils 32 befindet. Das heißt, dass die Verschwenkung des Schwenkrahmens relativ zum Adapterrahmen 28 durch die Schwenkeinrichtung ausschließlich durch die am Kuppelmodulfußteil angeordnete Schwenkeinrichtung 40 erfolgt (Fig. 3). Hieraus folgt aber auch, dass für die Demontage bzw. Montage die Schwenkeinrichtung 40 nicht tangiert ist.

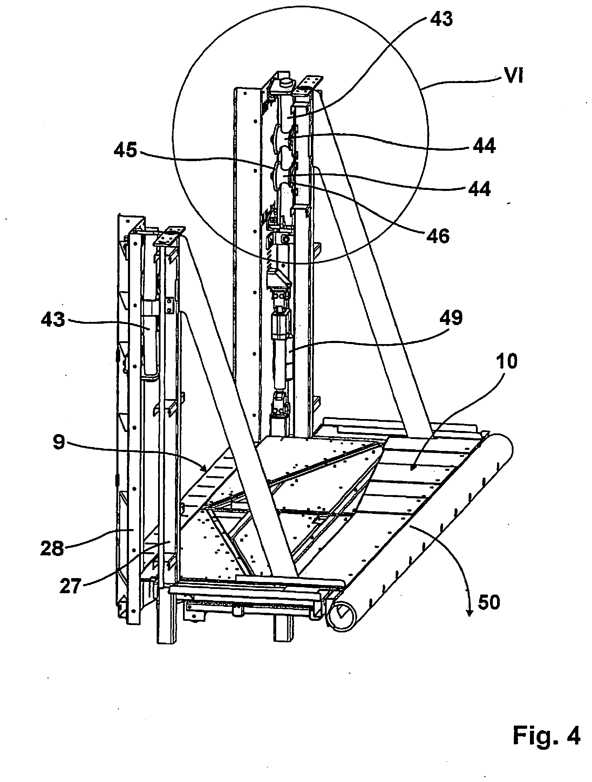

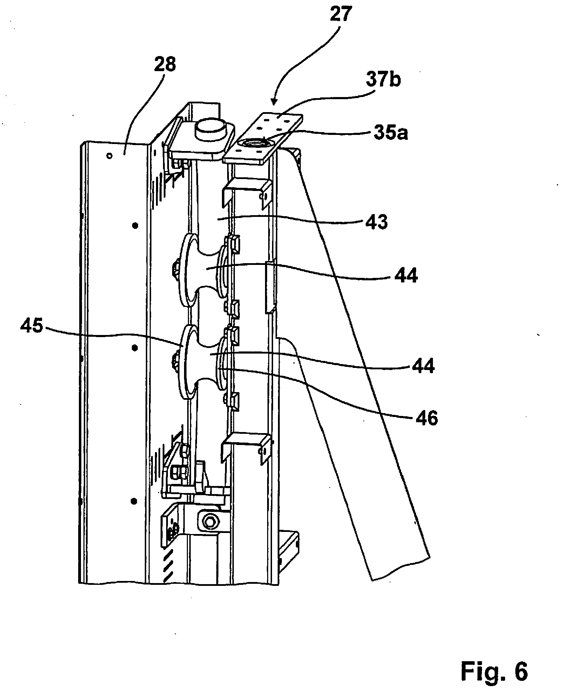

Insbesondere aus der Fig. 4 aber auch aus der Fig. 6 und der Fig. 7 ergibt sich die Ausbildung der drei Schwenkvorrichtungen 42, die zusammen die Schwenkeinrichtung 40 bilden. Die Schwenkvorrichtung 42 umfasst den Schienenabschnitt 43, der kreisbogenförmig und im Querschnitt rund ausgebildet ist, wie sich das bereits in Anschauung von Fig. 4 und Fig. 6 insbesondere aber auch aus Fig. 7 ergibt. Der Schienenabschnitt 43 nimmt zwei Rollen 44 auf, wobei eine jede Rolle 44 einen ersten großen Bund 45 und einen zweiten kleineren Bund 46 aufweist. Es wurde bereits an anderer Stelle darauf hingewiesen, dass der erste große Bund 45 bis zum Äquator des im Querschnitt runden Schienenabschnittes 43 reicht. Das heißt, die Überdeckung des im Querschnitt kreisrunden Schienenabschnitts 43 durch den ersten größeren Bund 45 sorgt dafür, dass ein verhältnismäßig größeres Moment in Richtung des Pfeiles 50 gemäß Fig. 4 aufgenommen werden kann, als in die entgegengesetzte Richtung. Dies vor dem Hintergrund, dass größere Momente in Richtung des Pfeiles 50 dann entstehen, wenn mehrere Personen auf dem Boden 10 des Kuppelmoduls aufstehen.

Zum Verschwenken des Schwenkarms 25 relativ zum Adapterrahmen 28 durch die Schwenkeinrichtung 40 ist im Bereich der Schwenkvorrichtungen 42 ein Schwenkantrieb 49 vorgesehen, der sich als Kolbenzylinderantrieb darstellt. Durch den Schwenkantrieb 49 erfolgt eine Verschiebung des Schwenkrahmens 27 relativ zum Adapterrahmen 28, mithin eine Verschiebung der beiden Rollen 44 auf dem Schienenabschnitt 43.

### Bezugszeichenliste:

- 1: Fluggastbrücke
- 2: Kabine
- 3: Mittellängsachse
- 9: Kabinenboden
- 10: Kuppelmodulboden
- 20: Kuppelmodul
- 21: Vordach
- 22: Rahmen am Vordach
- 23: Bumper
- 24: Schenkel des Kuppelmoduls (Kuppelmodulschenkel)
- 25: Schwenkarm
- 26: Kuppelmodulkopfteil
- 27: Schwenkrahmen
- 28: Adapterrahmen
- 32: Kuppelmodulfußteil
- 34: Kopfteilschenkel
- 35: Zapfen
- 35a: Aufnahme für Zapfen
- 36: Fußteilschenkel
- 37a: erste Kuppelplatte des Kopfteilschenkels
- 37b: zweite Kuppelplatte des Fußteilschenkels
- 37c: Schrauben
- 38: Deckensteg
- 39: Bodensteg
- 40: Schwenkeinrichtung
- 42: Schwenkvorrichtung
- 43: Schienenabschnitt
- 44: Rolle
- 45: erster großer Bund
- 46: zweiter kleinerer Bund
- 49: Schwenkantrieb
- 50: Pfeil

## Patentansprüche

1. Kuppelmodul (20) als Schnittstelle zwischen der Kabine (2) einer Fluggastbrücke (1) und einem Flugzeug, wobei das Kuppelmodul (20) ein Vordach (21) und einen von dem Vordach (21) überspannten Kuppelmodulboden (10) aufweist,
wobei das Kuppelmodul (20) in der Höhe horizontal teilbar ist, wobei das Kuppelmodul (20) zwei Kuppelmodulschenkel (24) sowie einen die Kuppelmodulschenkel (24) deckenseitig verbindenden Deckensteg (38) umfasst, wobei das Kuppelmodul (20) im Bereich der Kuppelmodulschenkel (24) in der Höhe unter Bildung eines Kuppelmodulkopfteiles (26) und eines Kuppelmodulfußteiles (32) teilbar ist,
**dadurch gekennzeichnet,**
**dass** das Kuppelmodul (20) einen Adapterrahmen (28) und einen Schwenkrahmen (27) aufweist, wobei der Adapterrahmen (28) und der Schwenkrahmen (27) im Bereich des Kuppelmodulfußteiles (32) durch eine Schwenkeinrichtung (40) um eine gedachte horizontale Achse (3) verschwenkbar miteinander in Verbindung stehen.

2. Kuppelmodul (20) als Schnittstelle zwischen der Kabine (2) einer Fluggastbrücke (1) und einem Flugzeug nach Anspruch 1, **dadurch gekennzeichnet,**
**dass** das Kuppelmodulkopfteil (26) zwei Kopfteilschenkel (34) und das Kuppelmodulfußteil (32) zwei Fußteilschenkel (36) aufweist, wobei der jeweilige Kopfteilschenkel (34) mit dem Fußteilschenkel (36) durch mindestens einen Zapfen (35) in Verbindung steht.

3. Kuppelmodul (20) als Schnittstelle zwischen der Kabine (2) einer Fluggastbrücke (1) und einem Flugzeug nach Anspruch 2, **dadurch gekennzeichnet,**
**dass** die Kopfteilschenkel (34) und die Fußteilschenkel (36) jeweils eine Kuppelplatte (37a, 37b) aufweisen, die miteinander verbindbar sind.

4. Kuppelmodul (20) als Schnittstelle zwischen der Kabine (2) einer Fluggastbrücke (1) und einem Flugzeug nach einem der voranstehenden Ansprüche 2 oder 3,
**dadurch gekennzeichnet,**
**dass** der Adapterrahmen (28) und der Schwenkrahmen (27) des Kuppelmoduls (20) im Bereich des Kuppelmodulbodens (10) einen Bodensteg (39) aufweisen, wobei die Schwenkeinrichtung (40) mindestens drei Schwenkvorrichtungen (42) aufweist, wobei jeweils eine Schwenkvorrichtung (42) in den Fußteilschenkeln (36) und eine Schwenkvorrichtung (42) am Bodensteg (39) angeordnet ist.

5. Kuppelmodul (20) als Schnittstelle zwischen der Kabine (2) einer Fluggastbrücke (1) und einem Flugzeug nach Anspruch 4, **dadurch gekennzeichnet,**
**dass** jede Schwenkvorrichtung (42) einen kreisbogenförmigen im Querschnitt runden Schienenabschnitt (43) zur Aufnahme von mindestens zwei Rollen (44) aufweist, wobei der Schienenabschnitt (43) am Adapterrahmen (28) und die mindestens zwei Rollen (44) am Schwenkrahmen (27) angeordnet sind.

6. Kuppelmodul (20) als Schnittstelle zwischen der Kabine (2) einer Fluggastbrücke (1) und einem Flugzeug nach Anspruch 5, **dadurch gekennzeichnet,**
**dass** die Rollen (44) auf ihrer dem Adapterrahmen (28) zugewandten Seite einen ersten Bund (45) aufweisen, der eine Erstreckung in Richtung des Äquators des im Querschnitt runden Schienenabschnittes (43) aufweist, die größer ist als die des zweiten Bundes (46) der gegenüberliegenden Seite der Rolle (44).

## Claims

1. A coupling module (20) as an interface between the cabin (2) of an air passenger bridge (1) and an aircraft, wherein the coupling module (20) comprises a canopy roof (21) and a coupling module floor (10) spanned over by the canopy roof (21),
wherein the coupling module (20) is horizontally divisible in height, wherein the coupling module (20) comprises two coupling module limbs (24) as well as a ceiling web (38) connecting the coupling module limbs (24) on the ceiling, wherein the coupling module (20) in the area of the coupling module limbs (24) is divisible in height by forming a coupling module head part (26) and a coupling module foot part (32),
**characterised in**
**that** the coupling module (20) comprises an adapter frame (28) and a pivoting frame (27), wherein the adapter frame (28) and the pivoting frame (27) in the area of the coupling module foot part (32) by a pivoting means (40) are connected with each other in a pivotable manner about an imaginary horizontal axis (3).

2. The coupling module (20) as an interface between the cabin (2) of an air passenger bridge (1) and an aircraft according to claim 1, **characterised in**
**that** the coupling module head part (26) comprises two head part limbs (34) and the coupling module foot part (32) comprises two foot part limbs (36), wherein the respective head part limb (34) is connected with the foot part limb (36) by at least one pin (35).

3. The coupling module (20) as an interface between the cabin (2) of an air passenger bridge (1) and an aircraft according to claim 2, **characterised in**
**that** the head part limbs (34) and the foot part limbs (36) each comprise a coupling plate (37a, 37b) which can be connected with each other.

4. The coupling module (20) as an interface between the cabin (2) of an air passenger bridge (1) and an aircraft according to any one of the preceding claims 2 or 3,
**characterised in**
**that** the adapter frame (28) and the pivoting frame (27) of the coupling module (20) in the area of the coupling module floor (10) comprise a base web (39), wherein the pivoting means (40) comprises at least three pivoting devices (42), wherein one pivoting device (42) each is arranged in the foot part limbs (36) and one pivoting device (42) is arranged on the base web (39).

5. The coupling module (20) as an interface between the cabin (2) of an air passenger bridge (1) and an aircraft according to claim 4, **characterised in**
**that** each pivoting device (42) comprises an arcuate rail section (43) of round cross-section for receiving at least two rollers (44), wherein the rail section (43) is arranged on the adapter frame (28) and the at least two rollers (44) are arranged on the pivoting frame (27).

6. The coupling module (20) as an interface between the cabin (2) and an aircraft (1) according to claim 5,
**characterised in**
**that** the rollers (44) comprise a first collar (45) on their side facing the adapter frame (28), which has an extension in the direction of the equator of the rail section (43) of round cross-section which is larger than that of the second collar (46) on the opposite side of the roller (44).

## Revendications

1. Module de couplage (20) en tant qu'interface entre une cabine (2) d'une passerelle passagers avion (1) et un avion, le module de couplage (20) comportant un avant-toit (21) et un plancher de module de couplage (10) qui est surplombé par l'avant-toit (21), le module de couplage (20) étant est divisible horizontalement en hauteur, le module de couplage (20) comportant deux branches de module de couplage (24) ainsi qu'une barre de plafond (38) liant les branches de module de couplage (24) au plafond, le module de couplage (20) dans la zone des branches de module de couplage (24) étant divisible en hauteur en formant un élément de tête de module de couplage (26) et un élément de pied de module de couplage (32),
**caractérisé en ce**
**que** le module de couplage (20) comprend un cadre adaptateur (28) et un cadre pivotant (27), le cadre adaptateur (28) et le cadre pivotant (27) dans la zone de l'élément de pied de module de couplage (32) étant liés l'un à l'autre de manière pivotante par un moyen de pivotement (40) autour d'un axe horizontal imaginaire (3).

2. Module de couplage (20) en tant qu'interface entre la cabine (2) d'une passerelle passager avion (1) et un avion selon la revendication 1,
**caractérisé en ce**
**que** l'élément de tête de module de couplage (26) comprend deux branches de l'élément de tête (34) et l'élément de pied de module de couplage (32) comprend deux branches de l'élément de pied (36), la branche respective de l'élément de tête (34) étant liée avec la branche de l'élément de pied (36) par au moins un pivot (35).

3. Module de couplage (20) en tant qu'interface entre la cabine (2) d'une passerelle passager avion (1) et un avion selon la revendication 2,
**caractérisé en ce**
**que** la branche de l'élément de tête (34) et la branche de l'élément de pied (36) chacune comporte une plaque de couplage (37a, 37b) qui peuvent être liées l'une avec l'autre.

4. Module de couplage (20) en tant qu'interface entre la cabine (2) d'une passerelle passager avion (1) et un avion selon l'une quelconque des revendications précédentes 2 ou 3, **caractérisé en ce**
**que** le cadre adaptateur (28) et le cadre pivotant (27) du module de couplage (20) dans la zone du plancher de module de couplage (10) comportent une barre de plancher (39), le moyen de pivotement (40) comportant au moins trois dispositifs de pivotement (42), un dispositif de pivotement (42) chacun étant agencé dans les branches de l'élément de pied (36) et un dispositif de pivotement (42) étant agencé à la barre de plancher (39).

5. Module de couplage (20) en tant qu'interface entre la cabine (2) d'une passerelle passager avion (1) et un avion selon la revendication 4,
**caractérisé en ce**
**que** chaque dispositif de pivotement (42) comporte un tronçon de rail (43) en forme d'arc de cercle avec une section transversale circulaire pour recevoir au moins deux galets (44), le tronçon de rail (43) étant agencé au cadre adaptateur (28) et l'au moins deux galets (44) étant agencés au cadre pivotant (27).

6. Module de couplage (20) en tant qu'interface entre la cabine (2) d'une passerelle passager d'avion (1) et un avion selon la revendication 5,
**caractérisé en ce**
**que** les galets (44) sur leur côté faisant face au cadre adaptateur (28) comportent une première collerette (45) comportant une extension dans la direction de l'équateur du tronçon de rail (43) à section transversale circulaire qui est plus grande que celle de la seconde collerette (46) du côté opposé du galet (44).
